# EUROPEAN PATENT SPECIFICATION

(11) **EP 4 533 508 B1**
(45) Date of publication and mention of the grant of the patent: **14.10.2026**
(21) Application number: 23731520.5
(22) Date of filing: 30.05.2023
(51) Int. Cl.: H01H 47/00, B60L 3/04, B60R 16/03, H02H 3/08

(54) **ARRANGEMENT WITH CIRCUIT BREAKER**
ANORDNUNG MIT LEISTUNGSSCHALTER
AGENCEMENT AVEC DISJONCTEUR

(30) Priority: 30.05.2022 GB 202207998
(43) Date of publication of application: 09.04.2025
(73) Proprietor: Eaton Intelligent Power Limited, Dublin 4, D04 Y0C2 (IE)
(72) Inventor: FRIEDRICHSEN, Lutz, 52379 Langerwehe (DE); ROESNER, Norbert, 53757 St. Augustin (DE); LANG, Volker, 53125 Bonn (DE)
(74) Representative: Epping - Hermann - Fischer
(86) International application number: PCT/EP2023/025254
(87) International publication number: WO 2023/232287

(56) References cited:
- KR-B1- 102 229 019
- US-A1- 2021 351 604
- US-A1- 2022 131 359

## Description

The present disclosure is related to an arrangement with a circuit breaker and an electric vehicle comprising an arrangement with a circuit breaker.

An electric vehicle typically comprises a battery, a plug for providing electric power to or from the battery and an electric motor coupled to the battery. In case of an overcurrent, a current flow has to be stopped. A connection to the plug is switched into a conducting state for charging the battery. The connection to the plug is switched into a non-conducting state in an operation phase in which no electric power flows through the plug.

Document US 2021/0351604 A1 describes a power source system with a first and a second switch, a storage battery and a control unit supplied with power from the storage battery. The first switch is configured as a latch type switch disposed on a first electrical path between the storage battery and the control unit. The second switch is configured as a latch type switch disposed on a second electrical path between the storage battery and an electrical equipment as an object to which the storage battery supplies power, such as e.g. a vehicle load. A current connection line couples the first switch to the second switch via a node.

Document US 2022/0131359 A1 describes a method for detection of an arc fault in an electrical circuitry and a motor vehicle. A first terminal of an energy storage is coupled via a switch, a load and a switching device to a second terminal of the energy storage. A further switch and a further load are connected parallel to the switch and the load. A controller is connected to the switches and the switching device to control them.

Document KR 102229019 B1 shows a battery management system.

It is an object to provide an arrangement with a circuit breaker and an electric vehicle comprising an arrangement with a circuit breaker which require only a small number of parts.

These objects are achieved by the subject-matter of the independent claim. Further developments and embodiments are described in the dependent claims.

There is provided an arrangement, comprising a circuit breaker, a switch, a first signal line, a first current connection line and a first power port. The circuit breaker comprises a first and a second breaker terminal. The circuit breaker is configured to open and to close a path between the first breaker terminal and the second breaker terminal. The switch is realized as a disconnector or a contactor and comprises a first and a second contact terminal. The switch is configured to open and to close a path between the first contact terminal and the second contact terminal. The first signal line couples the circuit breaker to the switch. The first current connection line is coupled to the first breaker terminal of the circuit breaker and to the first contact terminal of the switch. The first power port is coupled to the first current connection line.

Advantageously, the second breaker terminal of the circuit breaker is connected e.g. to a battery. Thus, in case of a short circuit or an overcurrent of a current that flows through the circuit breaker (e.g. from or to the battery), the circuit breaker is configured to detect the short circuit or the overcurrent and to set the path between the first breaker terminal and the second breaker terminal in a non-conducting state. Advantageously, the second contact terminal of the switch is connected e.g. to a plug. Thus, the switch allows to control whether an electric power is able to flow through the switch. The first power port is coupled via the circuit breaker to the battery. The first power port is e.g. configured to be coupled or connected to an electric motor.

In an embodiment of the arrangement, after detection of a fault of the arrangement, a magnetic drive assembly of the circuit breaker and a magnetic drive assembly of the switch are de-energized simultaneously or approximately simultaneously.

In an embodiment of the arrangement, after detection of a fault of the arrangement, the circuit breaker is configured to immediately open the path between the first breaker terminal and the second breaker terminal, and the circuit breaker is configured to control the switch such that the path between the first contact terminal and the second contact terminal of the switch is immediately opened.

In an embodiment of the arrangement, the circuit breaker includes a current sensor configured to measure a load current flowing through the path between the first breaker terminal and the second breaker terminal.

In an embodiment of the arrangement, the switch is free from a current sensor.

In an embodiment of the arrangement, a magnetic drive assembly of the circuit breaker and a magnetic drive assembly of the switch are de-energized simultaneously or approximately simultaneously, when the load current is higher than a predetermined current value.

In an embodiment of the arrangement, the first signal line is connected to a coil of the switch. The magnetic drive assembly of the switch includes the coil. Thus, the circuit breaker is configured to directly control the coil of the switch and, thus, to control the magnetic drive assembly of the switch.

In an embodiment of the arrangement, the switch comprises a mirror contact. The arrangement includes a second signal line that connects the circuit breaker and the mirror contact of the switch.

In an embodiment of the arrangement, the circuit breaker comprises a control unit connected to the first signal line. The circuit breaker is configured to electrically control the switch for switching during regular operation and in the event of a fault.

In an embodiment of the arrangement, the circuit breaker is implemented as master and the switch is implemented as slave.

In an embodiment of the arrangement, the switch is free of a blow-out opening for pressure relief.

In an embodiment, the arrangement comprises a battery management unit and a further signal line. The further signal line is coupled to the battery management unit and to the circuit breaker.

In an embodiment of the arrangement, during regular operation of the arrangement, the circuit breaker or the battery management unit is configured to control the switch such that the path between the first contact terminal and the second contact terminal of the switch is closed with a closing delay after the path between the first breaker terminal and the second breaker terminal of the circuit breaker has been closed.

In an embodiment of the arrangement, the closing delay is in a range between 50 ms and 300 ms or alternatively in a range between 100 ms and 200 ms.

In an embodiment of the arrangement, during regular operation of the arrangement, the circuit breaker or the battery management unit is configured to control the switch such that the path between the first contact terminal and the second contact terminal of the switch is opened with an opening delay after the path between the first breaker terminal and the second breaker terminal of the circuit breaker has been opened.

In an embodiment of the arrangement, the opening delay is in a range between 50 ms and 300 ms or alternatively in a range between 100 ms and 200 ms.

In an embodiment of the arrangement, the circuit breaker is configured for protection of a drive path and a load path of an electric vehicle. The switch is only inserted in the load path. The switch is not inserted in the drive path.

In an embodiment, an electric vehicle comprises the arrangement, a battery coupled to the second breaker terminal of the circuit breaker, an electric motor coupled to the first power port and a plug coupled to the second contact terminal of the switch.

In an embodiment, the arrangement realizes a circuit breaker master slave concept. The arrangement is implemented e.g. for automotive applications.

In an example, the switch is realized as a disconnector, contactor, further circuit breaker, charging switch, charge disconnect switch, slave load contactor or slave load disconnect contactor. The circuit breaker is realized e.g. as an overload protection device or charging breaker.

In an example, the switch is fully controlled by an electronic of the circuit breaker. The arrangement realizes e.g. the coordination of the circuit breaker and the switch in the event of an overload. The circuit breaker and the switch are structurally identical and have nearly the same dynamic during a contact levitation during a short circuit. The drive systems of the circuit breaker and the switch perform a simultaneous rapid switch off. The circuit breaker and the switch are coordinated in the event of an overload.

In an example, the circuit breaker and the switch form a system. An activation of the switch is performed by the circuit breaker. Commands from the battery management unit or a battery management system, abbreviated BMS, are processed by the circuit breaker, and the switch is activated accordingly. The switch switches on first and after that the circuit breaker switches on. The circuit breaker switches off first and after that the switch switches off. The switch performs a load-free switching. In an example, the switch has an emergency switching property. The switch has connector interfaces.

In an example, a connection between the circuit breaker and the switch is realized with a 4-pin plug (2 * coil + 2 * mirror contact). Thus, the first signal line includes two wires that are connected to the coil of the switch. The second signal line has two further wires that are connected to the mirror contact of the switch. The two wires and two further wires connect the control unit of the circuit breaker with the coil of the switch and the mirror contact of the switch.

In an example, a connection between the circuit breaker and the switch is realized with an 8-pin plug for the circuit breaker (additional enable input and diagnostic input, abbreviated DIA, for mirror contact of the switch or the circuit breaker).

The following description of figures of embodiments may further illustrate and explain aspects of the arrangement and of the electric vehicle. Parts and devices with the same structure and the same effect, respectively, appear with equivalent reference symbols. In so far as parts or devices correspond to one another in terms of their function in different figures, the description thereof is not repeated for each of the following figures.
- Figure 1: shows an example of an arrangement with a circuit breaker,
- Figure 2: shows a further example of an arrangement with a circuit breaker, and
- Figure 3: shows an example of an electric vehicle.

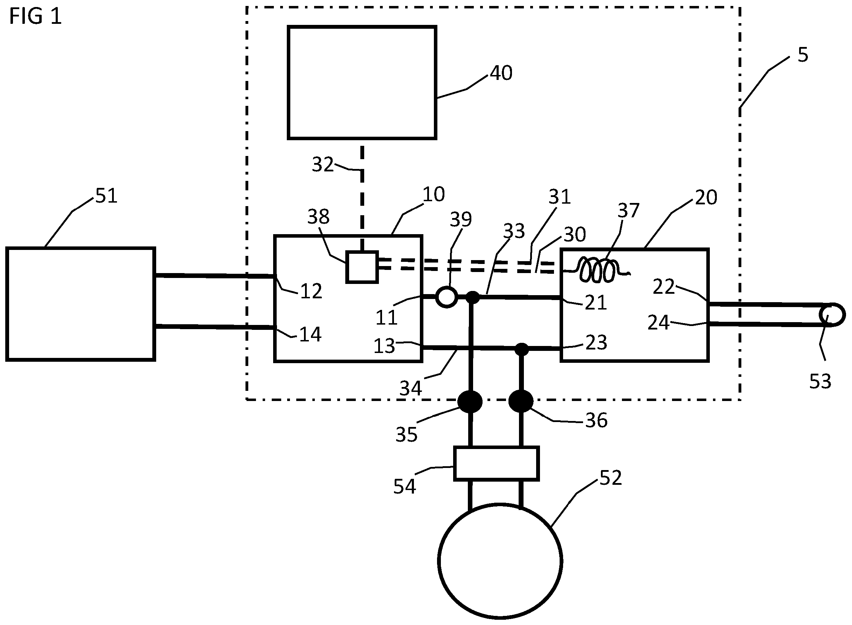

Figure 1 shows an example of an arrangement 5 with a circuit breaker 10. The circuit breaker 10 comprises a first and a second breaker terminal 11, 12. The circuit breaker 10 opens and closes a path between the first breaker terminal 11 and the second breaker terminal 12. The circuit breaker 10 includes a third and a fourth breaker terminal 13, 14. The circuit breaker 10 opens and closes a path between the third breaker terminal 13 and the fourth breaker terminal 14 simultaneously with the opening and closing of the path between the first breaker terminal 11 and the second breaker terminal 12.

A switch 20 of the arrangement 5 is realized as a disconnector or a contactor. The switch 20 comprises a first and a second contact terminal 21, 22. The switch 20 opens and closes a path between the first contact terminal 21 and the second contact terminal 22. The switch 20 includes a third and a fourth contact terminal 23, 24. The switch 20 opens and closes a path between the third contact terminal 23 and the fourth contact terminal 23, 24 simultaneously with the opening and closing of the first contact terminal 21 and the second contact terminal 22.

The arrangement 5 includes a first signal line 30 that is coupled to the circuit breaker 10 and to the switch 20. A first current connection line 33 of the arrangement 5 couples the first breaker terminal 11 to the first contact terminal 21. The first current connection line 33 directly and permanently connects the first breaker terminal 11 to the first contact terminal 21. A second current connection line 34 of the arrangement 5 couples the third breaker terminal 13 to the third contact terminal 23. The second current connection line 34 directly and permanently connects the third breaker terminal 13 to the third contact terminal 23.

A first power port 35 of the arrangement 5 is connected to the first current connection line 33, the first breaker terminal 11 or the first contact terminal 21. A second power port 36 of the arrangement 5 is connected to the second current connection line 34, the third breaker terminal 13 or the third contact terminal 23.

The circuit breaker 10 includes a current sensor 39 that measures a load current that flows through the path between the first breaker terminal 11 and the second breaker terminal 12 or through the first or the second breaker terminal 11, 12. The first signal line 30 is connected to a coil 37 of the switch 20. Moreover, the circuit breaker 10 comprises a control unit 38 connected to the first signal line 30. The control unit 38 electrically controls the switch 20 for switching during regular operation and in the event of a fault. The control unit 38 is implemented as e.g. microprocessor or microcontroller.

The switch 20 comprises a mirror contact (not shown). The arrangement 5 includes a second signal line 31 that connects the control unit 38 of the circuit breaker 10 and the mirror contact of the switch 20.

Furthermore, the arrangement 5 comprises a battery management unit 40 and a further signal line 32. The further signal line 32 couples the battery management unit 40 to the circuit breaker 10. In an example, the arrangement 5 is free from a signal line that directly connects the battery management unit 40 to the switch 20.

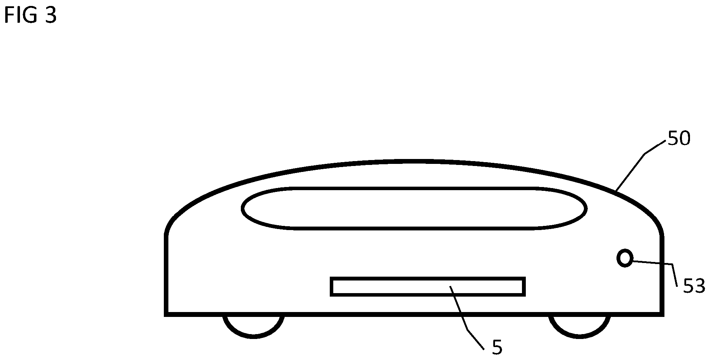

An electric vehicle 50 (as shown e.g. in Figure 3) comprises the arrangement 5, a battery 51 coupled to the second and the fourth breaker terminal 12, 14, an electric motor 52 coupled to the first and the second power port 35, 36 and a plug 53 coupled to the second and the fourth contact terminal 22, 24 of the switch 20.

Moreover, the electric vehicle 50 incorporates a voltage converter 54 that is coupled to the first power port 35 and to the electric motor 52. The voltage converter 54 couples the first and the second power port 35, 36 to the electric motor 52. A DC voltage is provided between the first and the second power port 35, 36. The electric motor 52 operates with an AC voltage. The voltage converter 54 is realized as a converter that converts the DC voltage into an AC voltage provided to the motor 52 or in case of a recuperation operation converts an AC voltage generated by the motor 52 into a DC voltage that is used for storing electric power in the battery 51. The voltage converter 54 is realized e.g. as an inverter or a frequency inverter.

After detection of a fault of the arrangement 5, a magnetic drive assembly of the circuit breaker 10 and a magnetic drive assembly of the switch 20 are de-energized simultaneously or approximately simultaneously. After detection of a fault of the arrangement 5, the circuit breaker 10 immediately opens the path between the first breaker terminal 11 and the second breaker terminal 12, and the circuit breaker 10 controls the switch 20 such that the path between the first contact terminal 21 and the second contact terminal 22 of the switch 20 is immediately opened.

A magnetic drive assembly of the circuit breaker 10 and a magnetic drive assembly of the switch 20 are de-energized simultaneously or approximately simultaneously, when the load current is higher than a predetermined current value.

The circuit breaker 10 is implemented as master and the switch 20 is implemented as slave.

During regular operation of the arrangement 5, the circuit breaker 10 or the battery management unit 40 controls the switch 20 such that the path between the first contact terminal 21 and the second contact terminal 22 of the switch 20 is closed after the path between the first breaker terminal 11 and the second breaker terminal 12 of the circuit breaker 10 has been closed. During regular operation of the arrangement 5, the circuit breaker 10 or the battery management unit 40 controls the switch 20 such that the path between the first contact terminal 21 and the second contact terminal 22 of the switch 20 is opened after the path between the first breaker terminal 11 and the second breaker terminal 12 of the circuit breaker 10 has been opened.

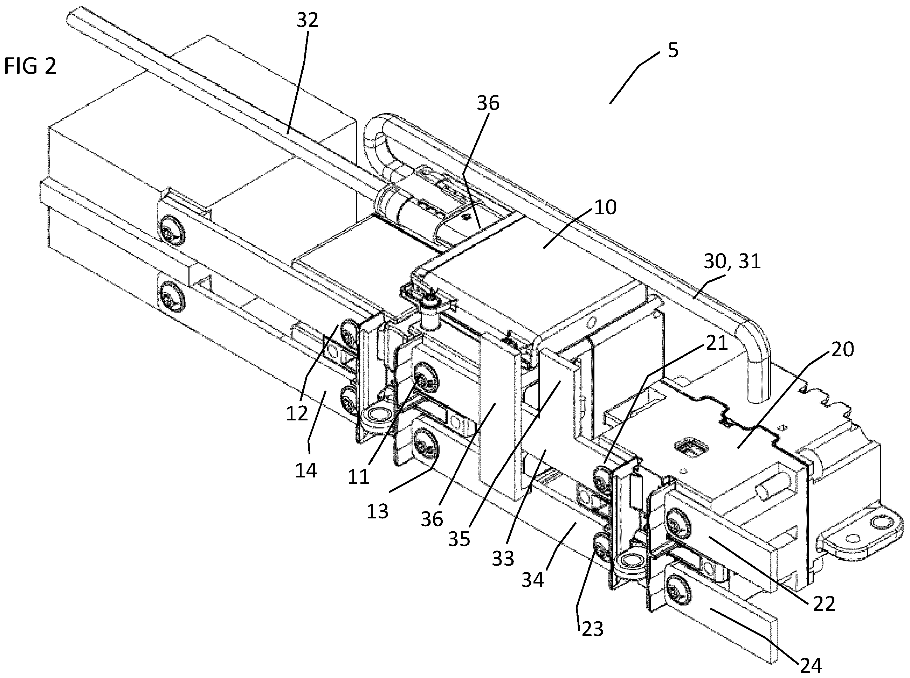

Figure 2 shows a further example of an arrangement 5 with a circuit breaker 10 which is a further development of the example shown in Figure 1. The switch 20 is free of a current sensor. The switch 20 is free of a blow-out opening or blow-out openings for pressure relief. The switch 20 is free from a microprocessor or microcontroller. Advantageously, fabrication costs of the switch 20 are lower than fabrication costs of the circuit breaker 10.

In an example, the magnetic drive assembly of the circuit breaker 10 and the magnetic drive assembly of the switch 20 are identical or nearly identical. Thus, the timing characteristic of the circuit breaker 10 and of the switch 20 are identical or nearly identical. In an example, metal parts of the circuit breaker 10 and metal parts of the switch 20 are identical or nearly identical. The circuit breaker 10 and the switch 20 both include e.g. a first and a second fixed contact and a contact bridge which are identical or nearly identical.

In an example, the circuit breaker 10 and the switch 20 are arranged on a common carrier (not shown) of the arrangement 5. The carrier is e.g. a fluid-cooled carrier. The carrier is e.g. a busbar.

Advantageously, the switch 20 performs a load-free switching on and off. Optionally, the switch 20 has an emergency switching feature. The control of the switch 20 is performed by the battery management unit 40 via the circuit breaker 10. No control electronics is necessary inside the switch 20, because the control is realized via the circuit breaker 10. The switch 20 achieves a safe galvanic isolation e.g. of the plug 53 to the other electric parts of the electric vehicle 50. The isolation distances of the switch 20 and of the circuit breaker 10 are identical.

The switch 20 is designed weld-free: Simultaneous fast demagnetization of the circuit breaker 10 and of the switch 20 is performed after reaching the tripping current. Thus, a welding of the fixed contacts to the contact bridge is avoided. Current paths inside the switch 20 and inside the circuit breaker 10 are identical. Pole resistances of the switch 20 and of the circuit breaker 10 are identical. The mirror contact of the switch 20 is configured for monitoring the main contacts of the switch 20.

Figure 3 shows an example of an electric vehicle 50 which comprises an arrangement 5 as shown e.g. in Figures 1 and 2. An electric vehicle 50 comprises the arrangement 5, the battery 51 coupled to the second breaker terminal 12 of the circuit breaker 10, the electric motor 52 coupled to the first power port 35 and the plug 53 coupled to the second contact terminal 22 of the switch 20.

The arrangement 5 implements a coordinated system between the circuit breaker 10 and the switch 20 by simultaneous de-energization of the drive systems of the circuit breaker 10 and the switch 20 in the event of a fault. The internal current measurement of the circuit breaker 10 is used for simultaneous de-energization of the drive systems of the circuit breaker 10 and the switch 20 after exceeding a defined threshold value.

The battery management unit 40 and the circuit breaker 10 are electrically coupled, e.g. by the further signal line 32. The circuit breaker 10 and the switch 20 are electrically coupled, e.g. by the first and the second signal line 30, 31 and the first and the second current connection line 33, 34.

A switching of the switch 20 is ensured by a switching sequence of the battery management unit 40. The load (such as the battery 51) is switched on first by the switch 20 followed by the circuit breaker 10. The load is switched off by the circuit breaker 10, the switch 20 opens load-free. Electrical control of the switch 20 is implemented in the circuit breaker 10 for operational switching and in the event of a fault. The switch 20 has no blow-out openings for pressure relief.

The circuit breaker 10 protects both the driving and charging path or branch of the electric vehicle 50 at the same time. The switch 20 is only arranged in the charging path or branch. The switch 20 forms a series circuit with the circuit breaker 10.

The embodiments shown in Figures 1 to 3 as stated represent examples of the improved arrangement 5 and electric vehicle 50; therefore, they do not constitute a complete list of all embodiments according to the improved arrangement 5 and electric vehicle 50. Actual arrangements 5 and electric vehicles 50 may vary from the embodiments shown in terms of parts, structures and shape, for example.

### Reference Numerals

- 5: arrangement
- 10: circuit breaker
- 11 - 14: circuit breaker terminal
- 20: switch
- 21 - 24: circuit terminal
- 30 - 32: signal line
- 33, 34: current connection line
- 35, 36: power port
- 37: coil
- 38: control unit
- 39: current sensor
- 40: battery management unit
- 50: electric vehicle
- 51: battery
- 52: electric motor
- 53: plug
- 54: voltage converter

## Claims

1. Arrangement (5), comprising
- a circuit breaker (10) with a first and a second breaker terminal (11, 12), wherein the circuit breaker (10) is configured to open and to close a path between the first breaker terminal (11) and the second breaker terminal (12),
- a switch (20) which is realized as a disconnector or a contactor and comprises a first and a second contact terminal (21, 22), wherein the switch (20) is configured to open and to close a path between the first contact terminal (21) and the second contact terminal (22),
- a first signal line (30) coupled to the circuit breaker (10) and to the switch (20),
- a first current connection line (33) coupled to the first breaker terminal (11) and to the first contact terminal (21), and
- a first power port (35) coupled to the first current connection line (33),
wherein the circuit breaker (10) comprises a control unit (38) connected to the first signal line (30).

2. Arrangement (5) of claim 1,
wherein after detection of a fault of the arrangement (5), a magnetic drive assembly of the circuit breaker (10) and a magnetic drive assembly of the switch (20) are de-energized simultaneously or approximately simultaneously.

3. Arrangement (5) of claim 1 or 2,
wherein after detection of a fault of the arrangement (5), the circuit breaker (10) is configured to immediately open the path between the first breaker terminal (11) and the second breaker terminal (12), and
the circuit breaker (10) is configured to control the switch (20) such that the path between the first contact terminal (21) and the second contact terminal (22) is immediately opened.

4. Arrangement (5) of one of claims 1 to 3,
wherein the circuit breaker (10) includes a current sensor (39) configured to measure a load current flowing through the path between the first breaker terminal (11) and the second breaker terminal (12),
wherein a magnetic drive assembly of the circuit breaker (10) and a magnetic drive assembly of the switch (20) are de-energized simultaneously or approximately simultaneously, when the load current is higher than a predetermined current value.

5. Arrangement (5) of one of claims 1 to 4,
wherein the first signal line (30) is connected to a coil (37) of the switch (20).

6. Arrangement (5) of one of claims 1 to 5,
wherein the control unit (38) is configured to electrically control the switch (20) for switching during regular operation and in the event of a fault.

7. Arrangement (5) of one of claims 1 to 6,
wherein the switch (20) comprises a mirror contact, and wherein the arrangement (5) includes a second signal line (31) that connects the circuit breaker (10) and the mirror contact of the switch (20).

8. Arrangement (5) of one of claims 1 to 7,
wherein the circuit breaker (10) is implemented as master and the switch (20) is implemented as slave.

9. Arrangement (5) of one of claims 1 to 8,
wherein the arrangement (5) comprises a battery management unit (40) and a further signal line (32),
wherein the further signal line (32) is coupled to the battery management unit (40) and to the circuit breaker (10).

10. Arrangement (5) of claim 9,
wherein during regular operation of the arrangement (5) the circuit breaker (10) or the battery management unit (40) is configured to control the switch (20) such that the path between the first contact terminal (21) and the second contact terminal (22) is closed with a closing delay after the path between the first breaker terminal (11) and the second breaker terminal (12) has been closed.

11. Arrangement (5) of claim 10,
wherein the closing delay is in a range between 50 ms and 300 ms.

12. Arrangement (5) of one of claims 9 to 11,
wherein during regular operation of the arrangement (5) the circuit breaker (10) or the battery management unit (40) is configured to control the switch (20) such that the path between the first contact terminal (21) and the second contact terminal (22) is opened with an opening delay after the path between the first breaker terminal (11) and the second breaker terminal (12) has been opened.

13. Arrangement (5) of claim 12,
wherein the opening delay is in a range between 50 ms and 300 ms.

14. Arrangement (5) of one of claims 1 to 13,
wherein the circuit breaker (10) is configured for protection of a drive path and a load path of an electric vehicle (50) and the switch (20) is inserted in the load path.

15. Electric vehicle (50), comprising
- the arrangement (5) of one of claims 1 to 14,
- a battery (51) coupled to the second breaker terminal (12),
- an electric motor (52) coupled to the first power port (35), and
- a plug (53) coupled to the second contact terminal (22).

## Patentansprüche

1. Anordnung (5), umfassend
- einen Leistungsschalter (10) mit einem ersten und einem zweiten Leistungsschalteranschluss (11, 12), wobei der Leistungsschalter (10) so konfiguriert ist, dass er einen Strompfad zwischen dem ersten Leistungsschalteranschluss (11) und dem zweiten Leistungsschalteranschluss (12) öffnet und schließt,
- einen Schalter (20), der als Trennschalter oder Schütz realisiert ist und einen ersten und einen zweiten Kontaktanschluss (21, 22) umfasst, wobei der Schalter (20) so konfiguriert ist, dass er einen Strompfad zwischen dem ersten Kontaktanschluss (21) und dem zweiten Kontaktanschluss (22) öffnet und schließt,
- eine erste Signalleitung (30), die mit dem Leistungsschalter (10) und dem Schalter (20) gekoppelt ist,
- eine erste Stromanschlussleitung (33), die mit dem ersten Leistungsschalteranschluss (11) und dem ersten Kontaktanschluss (21) gekoppelt ist, und
- einen ersten Stromanschluss (35), der mit der ersten Stromanschlussleitung (33) gekoppelt ist,
wobei der Leistungsschalter (10) eine Steuereinheit (38) umfasst, die mit der ersten Signalleitung (30) verbunden ist.

2. Anordnung (5) nach Anspruch 1,
wobei nach Erkennung eines Fehlers der Anordnung (5) eine magnetische Antriebsbaugruppe des Leistungsschalters (10) und eine magnetische Antriebsbaugruppe des Schalters (20) gleichzeitig oder annähernd gleichzeitig stromlos geschaltet werden.

3. Anordnung (5) nach Anspruch 1 oder 2,
wobei der Leistungsschalter (10) nach Erkennung eines Fehlers der Anordnung (5) so konfiguriert ist, dass er den Strompfad zwischen dem ersten Leistungsschalteranschluss (11) und dem zweiten Leistungsschalteranschluss (12) sofort öffnet, und
der Leistungsschalter (10) so konfiguriert ist, dass er den Schalter (20) so steuert, dass der Strompfad zwischen dem ersten Kontaktanschluss (21) und dem zweiten Kontaktanschluss (22) sofort geöffnet wird.

4. Anordnung (5) nach einem der Ansprüche 1 bis 3,
wobei der Leistungsschalter (10) einen Stromsensor (39) einschließt, der so konfiguriert ist, dass er einen Laststrom misst, der durch den Pfad zwischen dem ersten Leistungsschalteranschluss (11) und dem zweiten Leistungsschalteranschluss (12) fließt, wobei eine magnetische Antriebsbaugruppe des Leistungsschalters (10) und eine magnetische Antriebsbaugruppe des Schalters (20) gleichzeitig oder annähernd gleichzeitig stromlos geschaltet werden, wenn der Laststrom einen vorgegebenen Stromwert überschreitet.

5. Anordnung (5) nach einem der Ansprüche 1 bis 4,
wobei die erste Signalleitung (30) mit einer Spule (37) des Schalters (20) verbunden ist.

6. Anordnung (5) nach einem der Ansprüche 1 bis 5,
wobei die Steuereinheit (38) so konfiguriert ist, dass sie den Schalter (20) sowohl im Normalbetrieb als auch im Fall eines Fehlers elektrisch zum Schalten ansteuert.

7. Anordnung (5) nach einem der Ansprüche 1 bis 6,
wobei der Schalter (20) einen Spiegelkontakt umfasst und
wobei die Anordnung (5) eine zweite Signalleitung (31) einschließt, die den Leistungsschalter (10) und den Spiegelkontakt des Schalters (20) verbindet.

8. Anordnung (5) nach einem der Ansprüche 1 bis 7,
wobei der Leistungsschalter (10) als Master implementiert ist und der Schalter (20) als Slave implementiert ist.

9. Anordnung (5) nach einem der Ansprüche 1 bis 8,
wobei die Anordnung (5) eine Batteriemanagementeinheit (40) und eine weitere Signalleitung (32) umfasst,
wobei die weitere Signalleitung (32) mit der Batteriemanagementeinheit (40) und dem Leistungsschalter (10) gekoppelt ist.

10. Anordnung (5) nach Anspruch 9,
wobei während des Normalbetriebs der Anordnung (5) der Leistungsschalter (10) oder die Batteriemanagementeinheit (40) so konfiguriert ist, dass er bzw. sie den Schalter (20) so steuert, dass der Strompfad zwischen dem ersten Kontaktanschluss (21) und dem zweiten Kontaktanschluss (22) mit einer Schließverzögerung geschlossen wird, nachdem der Strompfad zwischen dem ersten Leistungsschalteranschluss (11) und dem zweiten Leistungsschalteranschluss (12) geschlossen wurde.

11. Anordnung (5) nach Anspruch 10,
wobei die Schließverzögerung im Bereich zwischen 50 ms und 300 ms liegt.

12. Anordnung (5) nach einem der Ansprüche 9 bis 11,
wobei während des Normalbetriebs der Anordnung (5) der Leistungsschalter (10) oder die Batteriemanagementeinheit (40) so konfiguriert ist, dass er bzw. sie den Schalter (20) so steuert, dass der Strompfad zwischen dem ersten Kontaktanschluss (21) und dem zweiten Kontaktanschluss (22) mit einer Öffnungsverzögerung geöffnet wird, nachdem der Strompfad zwischen dem ersten Leistungsschalteranschluss (11) und dem zweiten Leistungsschalteranschluss (12) geöffnet wurde.

13. Anordnung (5) nach Anspruch 12,
wobei die Öffnungsverzögerung im Bereich zwischen 50 ms und 300 ms liegt.

14. Anordnung (5) nach einem der Ansprüche 1 bis 13,
wobei der Leistungsschalter (10) zum Schutz eines Antriebspfads und eines Lastpfads eines Elektrofahrzeugs (50) konfiguriert ist und der Schalter (20) im Lastpfad eingefügt ist.

15. Elektrofahrzeug (50), umfassend
- die Anordnung (5) nach einem der Ansprüche 1 bis 14,
- eine Batterie (51), die mit dem zweiten Leistungsschalteranschluss (12) gekoppelt ist,
- einen Elektromotor (52), der mit dem ersten Stromanschluss (35) gekoppelt ist, und
- einen Stecker (53), der mit dem zweiten Kontaktanschluss (22) gekoppelt ist.

## Revendications

1. Agencement (5) comprenant
- un disjoncteur (10) avec une première et une deuxième borne de disjoncteur (11, 12), dans lequel le disjoncteur (10) est conçu pour ouvrir et fermer un chemin entre la première borne de disjoncteur (11) et la deuxième borne de disjoncteur (12),
- un interrupteur (20) qui est réalisé comme un sectionneur ou un contacteur et comprend une première et une deuxième borne de contact (21, 22), dans lequel l'interrupteur (20) est conçu pour ouvrir et fermer un chemin entre la première borne de contact (21) et la deuxième borne de contact (22),
- une première ligne de signal (30) couplée au disjoncteur (10) et à l'interrupteur (20),
- une première ligne de connexion de courant (33) couplée à la première borne de disjoncteur (11) et à la première borne de contact (21), et
- un premier port d'alimentation (35) couplé à la première ligne de connexion de courant (33),
dans lequel le disjoncteur (10) comprend une unité de commande (38) connectée à la première ligne de signal (30).

2. Agencement (5) selon la revendication 1,
dans lequel, après la détection d'un défaut de l'agencement (5), un ensemble d'entraînement magnétique du disjoncteur (10) et un ensemble d'entraînement magnétique de l'interrupteur (20) sont mis hors tension simultanément ou approximativement simultanément.

3. Agencement (5) selon la revendication 1 ou 2,
dans lequel, après la détection d'un défaut de l'agencement (5), le disjoncteur (10) est conçu pour ouvrir immédiatement le chemin entre la première borne de disjoncteur (11) et la deuxième borne de disjoncteur (12), et
le disjoncteur (10) est conçu pour commander l'interrupteur (20) de telle sorte que le chemin entre la première borne de contact (21) et la deuxième borne de contact (22) soit immédiatement ouvert.

4. Agencement (5) selon l'une des revendications 1 à 3,
dans lequel le disjoncteur (10) comprend un capteur de courant (39) conçu pour mesurer un courant de charge circulant dans le chemin entre la première borne de disjoncteur (11) et la deuxième borne de disjoncteur (12),
dans lequel un ensemble d'entraînement magnétique du disjoncteur (10) et un ensemble d'entraînement magnétique de l'interrupteur (20) sont mis hors tension simultanément ou approximativement simultanément, lorsque le courant de charge est supérieur à une valeur de courant prédéterminée.

5. Agencement (5) selon l'une des revendications 1 à 4,
dans lequel la première ligne de signal (30) est connectée à une bobine (37) de l'interrupteur (20).

6. Agencement (5) selon l'une des revendications 1 à 5,
dans lequel l'unité de commande (38) est conçue pour commander électriquement l'interrupteur (20) pour la commutation en fonctionnement normal et en cas de défaut.

7. Agencement (5) selon l'une des revendications 1 à 6,
dans lequel l'interrupteur (20) comprend un contact miroir, et
dans lequel l'agencement (5) comprend une deuxième ligne de signal (31) qui relie le disjoncteur (10) et le contact miroir de l'interrupteur (20).

8. Agencement (5) selon l'une des revendications 1 à 7,
dans lequel le disjoncteur (10) est mis en œuvre comme maître et l'interrupteur (20) est mis en œuvre comme esclave.

9. Agencement (5) selon l'une des revendications 1 à 8,
dans lequel l'agencement (5) comprend une unité de gestion de batterie (40) et une ligne de signal supplémentaire (32),
dans lequel la ligne de signal supplémentaire (32) est couplée à l'unité de gestion de batterie (40) et au disjoncteur (10).

10. Agencement (5) selon la revendication 9,
dans lequel, pendant le fonctionnement normal de l'agencement (5), le disjoncteur (10) ou l'unité de gestion de batterie (40) est conçu pour commander l'interrupteur (20) de sorte que le chemin entre la première borne de contact (21) et la deuxième borne de contact (22) soit fermé avec un délai de fermeture après que le chemin entre la première borne de disjoncteur (11) et la deuxième borne de disjoncteur (12) a été fermé.

11. Agencement (5) selon la revendication 10,
dans lequel le délai de fermeture se situe entre 50 ms et 300 ms.

12. Agencement (5) selon l'une des revendications 9 à 11,
dans lequel, pendant le fonctionnement normal de l'agencement (5), le disjoncteur (10) ou l'unité de gestion de batterie (40) est conçu pour commander l'interrupteur (20) de sorte que le chemin entre la première borne de contact (21) et la deuxième borne de contact (22) soit ouvert avec un délai d'ouverture après que le chemin entre la première borne de disjoncteur (11) et la deuxième borne de disjoncteur (12) a été ouvert.

13. Agencement (5) selon la revendication 12,
dans lequel le délai d'ouverture se situe entre 50 ms et 300 ms.

14. Agencement (5) selon l'une des revendications 1 à 13,
dans lequel le disjoncteur (10) est conçu pour la protection d'un chemin d'entraînement et d'un chemin de charge d'un véhicule électrique (50) et l'interrupteur (20) est inséré dans le chemin de charge.

15. Véhicule électrique (50) comprenant
- l'agencement (5) selon l'une des revendications 1 à 14,
- une batterie (51) couplée à la deuxième borne de disjoncteur (12),
- un moteur électrique (52) couplé au premier port d'alimentation (35), et
- une fiche (53) couplée à la deuxième borne de contact (22).
